# EUROPEAN PATENT APPLICATION

(11) **EP 2 587 283 A2**
(43) Date of publication of application: **01.05.2013**
(21) Application number: 12159604.3
(22) Date of filing: 15.03.2012
(51) Int. Cl.: G02B 5/20, G02B 5/26, G03F 7/00, G06F 3/041

(54) **Optical touch sensing structure with enhanced light transmittance and manufacturing method thereof**

(30) Priority: 28.10.2011 TW 100139400; 05.01.2012 TW 101100471
(71) Applicant: Subtron Technology Co., Ltd., Hsinchu (TW)
(72) Inventor: Yang, Ming-Huei, Hsinchu (TW)
(74) Representative: Becker Kurig Straus

(57) **Abstract**

An optical touch sensing structure (100') includes a transparent substrate (110) and a stacked transparent optical layer (120'). The transparent substrate has an upper surface (112). The stacked transparent optical layer is disposed on the upper surface of the transparent substrate with a portion of the upper surface being exposed. The stacked transparent optical layer (120') is formed by stacking at least one first transparent optical layer (122') and at least one second transparent optical layer (124'). The refractive index of the first transparent optical layer is greater than the refractive index of the second transparent optical layer. The stacked transparent optical layer is adapted to allow a visible light to pass through and has a rough surface (125'). When an infrared light is incident to the stacked transparent optical layer, the infrared light is reflected by the stacked transparent optical layer and scattered by the rough surface (125').

## Description

### CROSS-REFERENCE TO RELATED APPLICATION

This application claims the priority benefit of Taiwan application serial no. 100139400, filed October 28, 2011 and Taiwan application serial no. 101100471, filed January 5 2012. The entirety of the above-mentioned patent applications is hereby incorporated by reference herein and made a part of this specification.

### BACKGROUND OF THE INVENTION

### 1. Field of the Invention

The present invention relates to a touch sensing structure, and more particularly, to an optical touch sensing structure and a method for manufacturing the optical touch sensing structure.

### 2. Description of Related Art

Conventional touch sensing devices can generally be categorized into resistive, capacitive, optical, acoustic and digitizer types. Taking the optical touch sensing display apparatus as an example, it usually includes a display, an infrared source, a touch sensing structure, a sensor and a processor. The display includes a backlight module and a display panel. In various touch sensing structure designs, there is one consisting of a transparent substrate, multiple white inorganic granules printed on the transparent substrate, and a protective layer covering the transparent substrate and the white inorganic granules. The touch sensing structure is disposed in front of the display panel for reflecting and scattering an infrared light. The infrared source is disposed within a touch object (usually referred to as a stylus) for generating the infrared light. When the infrared light generated by the infrared source passes through the touch sensing structure, the infrared light is reflected at an interface between the transparent substrate and the air, or reflected by the white inorganic granules, or scattered by the white inorganic granules. The reflected and scattered infrared light is detected by the sensor that is also disposed in the touch object. When the touch object touches the touch sensing structure and moves along a surface of the touch sensing structure, the processor determines the position and trajectory of a touch point according to infrared intensity and image change detected by the sensor.

However, the white inorganic granules themselves are not transparent, i.e. they are not light-transmittable and, therefore, they shield a portion of the light thus reducing the luminance of the image displayed on the display. Further, in addition to reflecting and scattering the infrared light, the white inorganic granules also reflect and scatter the light emitted by the display and the environmental light, which causes the image to get foggy, thereby further reducing the image contrast and resolution.

### SUMMARY OF THE INVENTION

Accordingly, the present invention is directed to an optical touch sensing structure that includes a stacked transparent optical layer allowing a visible light to pass through and capable of reflecting and scattering an infrared light.

The present invention is also directed to a method for manufacturing the above optical touch sensing structure.

The present invention provides an optical touch sensing structure including a transparent substrate and a stacked transparent optical layer. The transparent substrate has an upper surface. The stacked transparent optical layer is disposed on the upper surface of the transparent substrate with a portion of the upper surface being exposed. The stacked transparent optical layer is formed by stacking at least one first transparent optical layer and at least one second transparent optical layer. The refractive index of the first transparent optical layer is greater than the refractive index of the second transparent optical layer. The stacked transparent optical layer is adapted to allow a visible light to pass through and has a rough surface. When an infrared light is incident to the stacked transparent optical layer, the infrared light is reflected by the stacked transparent optical layer and scattered by the rough surface.

The present invention further provides a method for manufacturing an optical touch sensing structure. In this method, a transparent substrate having an upper surface is provided. A stacked transparent optical layer is formed on the upper surface of the transparent substrate. The stacked transparent optical layer is formed by stacking at least one first transparent optical layer and at least one second transparent optical layer. The refractive index of the first transparent optical layer is greater than the refractive index of the second transparent optical layer. The stacked transparent optical layer exposes a portion of the upper surface of the transparent substrate. The stacked transparent optical layer is adapted to allow a visible light to pass through and includes a rough surface. When an infrared light is incident to the stacked transparent optical layer, the infrared light is reflected by the stacked transparent optical layer and scattered by the rough surface.

In view of the foregoing, because the optical touch sensing structure of the present invention includes the stacked transparent optical layer that allows a visible light to pass through and can reflect and scatter an infrared light, when the present optical touch sensing structure is subsequently applied in, for example, the display, it can effectively enhance the light transmittance of the display as well as prevent the image from getting foggy.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

Fig. 1A to Fig. 1D are cross-sectional views illustrating a method for manufacturing an optical touch sensing structure according to one embodiment of the present invention.

Fig. 1E illustrates an infrared light incident to a stacked transparent optical layer from the side of the transparent substrate of Fig. 1D.

Fig. 2A to Fig. 2C are cross-sectional views illustrating a method for manufacturing an optical touch sensing structure according to another embodiment of the present invention.

### DESCRIPTION OF THE EMBODIMENTS

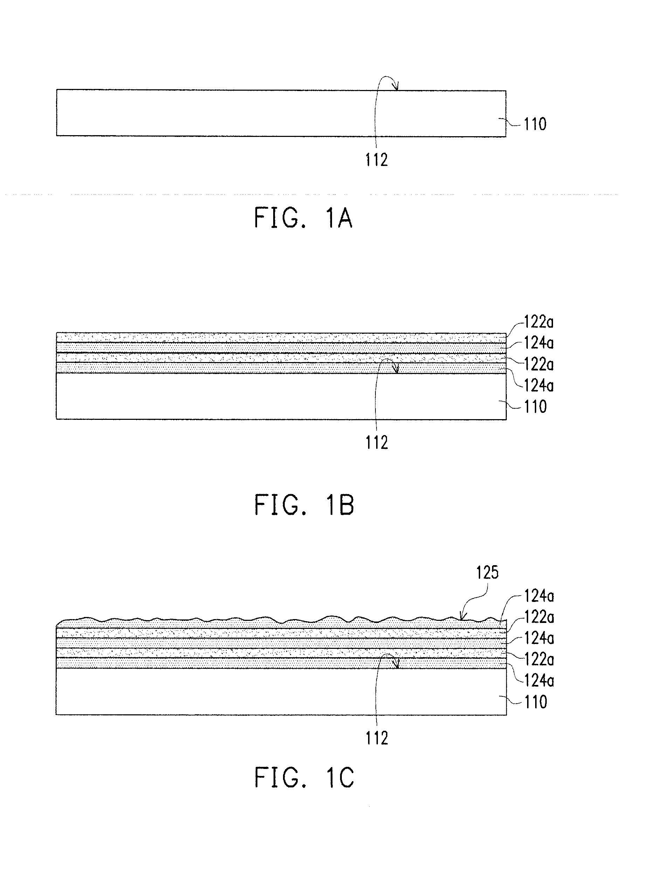

Fig. 1A to Fig. 1D are cross-sectional views illustrating a method for manufacturing an optical touch sensing structure according to one embodiment of the present invention. Referring to Fig. 1A, in the optical touch sensing structure according to the present embodiment, a transparent substrate 110 is first provided. The transparent substrate 110 includes an upper surface 112. In the present embodiment, the material of the transparent substrate 110 is, for example, glass, plastic, or another material having a high light transmittance.

Referring to Fig. 1B, a stack of at least one first transparent material layer 122a (two first layers are illustrated in Fig. 1 B) and at least one second transparent material layer 124a (two second layers are illustrated in Fig. 1B) are then formed on the upper surface 112 of the transparent substrate 110 through vacuum deposition. The second transparent material layer 124a completely covers the upper surface 112 of the transparent substrate 110, the first transparent material layer 122a completely covers the second transparent material layer 124a, and the first transparent material layers 122a and the second transparent material layers 124a are stacked with each other and have a shape conforming to each other. In the present embodiment, the first transparent material layer 122a is a transparent material layer having a high refractive index, while the second transparent material layer 124a is a transparent material layer having a low refractive index.

Referring to Fig. 1C, another second transparent material layer 124a is then formed as an outermost layer and the outmost second transparent material layer 124a is surface treated to form a rough surface 125. The central line average surface roughness (Ra) of the rough surface 125 is, for example, greater than or equal to 0.03µm. In the regard, the surface treating method includes surface micro-etching, atmospheric plasma coating or oxide particle coating method.

While it is illustrated in this embodiment that the second transparent material layer 124a is formed on the transparent substrate 110 prior to the formation of the first transparent material layer 122a, it is noted that the present invention is not intended to limit the sequence of forming the first transparent material layer 122a and the second transparent material layer 124a. In another embodiment not illustrated, the innermost material that directly contacting the upper surface 112 of the transparent substrate 110 may also be the first transparent material layer 122a, and the outermost material layer of the stack may also be the first transparent material layer 122a. That is, it is possible that the first transparent material layer 122a has a rough surface. Therefore, the construction illustrated herein should not be regarded as limiting.

In brief, it may be the first transparent material layer 122a or the second transparent material layer 124a that directly contacts the upper surface 112 of the transparent substrate 110, and the outermost material of the stack may also be the first transparent material layer 122a or the second transparent material layer 124a. In addition, the thickness of each first transparent material layer 122a and the thickness of each second transparent material layer 124a may vary according to actual requirements and the present invention is not intended to limit the layers to have a particular thickness. In general, the thickness of each first transparent material layer 122a and the thickness of each second transparent material layer 124a range, for example, between 10nm and 200nm.

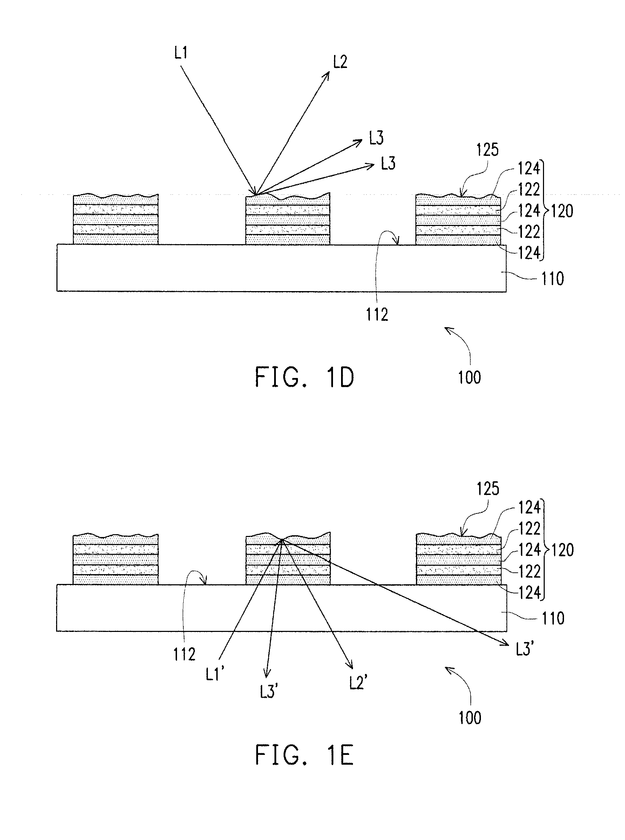

Referring to Fig. 1D, finally, the first transparent material layers 122a and the second transparent material layers 124a are patterned to form alternately stacked first transparent optical layers 122 and second transparent optical layers 124, thereby achieving a stacked transparent optical layer 120 having the rough surface 125. The patterning step utilizes, for example, an etching process. By now, the stacked transparent optical layer 120 has been formed on the upper surface 112 of the transparent substrate 110, with a portion of the upper surface 112 of the transparent substrate 110 being exposed.

More specifically, the stacked transparent optical layer 120 is formed by alternately stacking the first transparent optical layers 122 and the second transparent optical layers 124. The stacked transparent optical layer 120 is adapted to allow a visible light to pass through and has a rough surface 125. In addition, when an infrared light (i.e. incident light L1) is incident to the stacked transparent optical layer 120, the stacked transparent optical layer 120 is adapted to reflect the infrared light (i.e. reflective light L2), and the rough surface 125 is adapted to scatter the infrared light (i.e. scattering light L3). The infrared light has a wavelength greater than or equal to 800nm. In particular, the refractive index of the first transparent optical layer 122 is greater than the refractive index of the second transparent optical layer 124. In this regard, a difference between the refractive index of the first transparent optical layer 122 and the refractive index of the second transparent optical layer 124 is greater than 0.4, with the refractive index of the first transparent optical layer 122 ranging between 2.0 and 2.5, and the refractive index of the second transparent optical layer 124 ranging between 1.4 and 1.6. The material of the first transparent optical layer 122 is, for example, Niobium pentoxide (Nb₂O₅), Tantalum pentoxide (Ta₂O₅) Titanium dioxide (TiO₂), Zinc sulfide (ZnS), or Zirconium dioxide (ZrO₂) and the material of the second transparent optical layer 124 is, for example, Silicon dioxide (SiO₂). By now, the fabrication of the optical touch sensing structure 100 has been completed.

As described above, although the stacked transparent optical layer 120 is illustrated herein as being formed by alternately stacking the first transparent optical layers 122 and the second transparent optical layers 124, the present invention is not intended to limit the stacked transparent optical layer 120 to the particular configuration. Rather, in other embodiments not illustrated, the stacked transparent optical layer 120 may also be formed by first transparent optical layers 122 and second transparent optical layers 124 that are not alternately stacked. That is, for example, the stacked transparent optical layer 120 may be formed by stacking one second optical layer 124 on multiple stacked first transparent optical layers 122, or has another stack design which allows a visible light to pass through and can reflect and scatter an infrared light, all of which are technical solutions that can be adopted by the present invention without departing from the scope of the present invention. The material and stack configuration (including the number and thickness of the layers as well as the manner of arranging the transparent optical layers with high or low refractive index) may be determined depending on the desired visible light transmittance and the desired infrared light reflectance.

Further, the present invention is not intended to limit the incident direction of the infrared light. Referring to Fig. 1E, in the present embodiment, the infrared light may also be incident from the transparent substrate 110 side (i.e. incident light L1') to the stacked transparent optical layer 120, where the stacked transparent optical layer 120 is adapted to reflect the infrared light (i.e. reflective light L2') and the rough surface 125 is adapted to scatter the infrared light (i.e. scattering light L3'). This is also a technical solution that can be adopted by the present invention without departing from the scope of the present invention. In brief, the infrared light may enter the optical touch sensing structure 100 from a side where the stacked transparent optical layer 120 is located as well as a side where the transparent substrate 110 is located. In practice, when installing the optical touch sensing structure 100, it is possible to orient the transparent substrate 110 side toward, for example, a display (not shown), or orient the stacked transparent optical layer 120 side toward, for example, a display (not shown).

Referring to Fig. 1D, in structure, the optical touch sensing structure 100 of the present embodiment includes the transparent substrate 110 and the stacked transparent optical layer 120. The transparent substrate 110 has the upper surface 112. The material of the transparent substrate 110 is, for example, glass or plastic. The stacked transparent optical layer 120 is disposed on the upper surface 112 of the transparent substrate 110, with a portion of the upper surface 112 being exposed. The stacked transparent optical layer 120 is formed by stacking the first transparent optical layers 122 and the second transparent optical layers 124. In particular, the refractive index of the first transparent optical layer 122 is greater than the refractive index of the second transparent optical layer 124, with a difference between the refractive index of the first transparent optical layer 122 and the refractive index of the second transparent optical layer 124 being greater than or equal to 0.4. The refractive index of the first transparent optical layer 122 ranges between 2.0 and 2.5, and the refractive index of the second transparent optical layer 124 ranges between 1.4 and 1.6. To this end, the material of the first transparent optical layer 122 is, for example, Niobium pentoxide (Nb₂O₅ Tantalum pentoxide (Ta₂Oₛ Titanium dioxide (TiO₂), Zinc sulfide (ZnS), or Zirconium dioxide (ZrO₂) and the material of the second transparent optical layer 124 is, for example, Silicon dioxide (SiO₂). The stacked transparent optical layer 120 is adapted to allow a visible light to pass through and has the rough surface 125. In addition, when an infrared light (i.e. incident light L1) is incident to the stacked transparent optical layer 120, the infrared light is reflected by the stacked transparent optical layer 120 (i.e. reflective light L2) and scattered by the rough surface 125 (i.e. scattering light L3). In addition, the central line average surface roughness (Ra) of the rough surface 125 is, for example, greater than or equal to 0.03µm.

In the present embodiment, the stacked transparent optical layer 120 is formed by stacking the first transparent optical layers 122 with high refractive index and the second transparent optical layers 124 with low refractive index, the material of the first transparent optical layer 122 is Niobium pentoxide (Nb₂O₅) Tantalum pentoxide (Ta₂O₅ Titanium dioxide (TiO₂), Zinc sulfide (ZnS), or Zirconium dioxide (ZrO₂), and the material of the second transparent optical layer 124 is, for example, Silicon dioxide (SiO₂). When the two materials are stacked, it provides high visible light transmission and high infrared light reflection capability. Therefore, when the infrared light is incident to the stacked transparent optical layer 120, the stacked transparent optical layer 120 is able to reflect the infrared light, and the rough surface 125 is able to scatter the infrared light. As such, when the optical touch sensing structure 100 is subsequently installed in front of, for example, a display (not shown), the optical touch sensing structure 100 can act as an effective reflector for reflecting the infrared light of the above-mentioned touch object, effectively enhance the light transmittance of the display, and prevent the image from getting foggy. Therefore, if this optical touch sensing structure 100 is placed in front of a display (not shown) or above a fixed image (e.g. patterns or characters printed on paper), a touch sensing interface can be provided which provides the display or fixed image with a touch sensing function.

It should be noted that the steps of forming the stacked transparent optical layer 120 are not limited. The element numerals and part of the content in the foregoing embodiment are continuously adopted in embodiments below, in which the same numerals are used to represent the same or similar elements, and the descriptions for the same technical contents are omitted. The descriptions for the omitted parts may be made reference to those in the foregoing embodiment, and are not further repeated herein again.

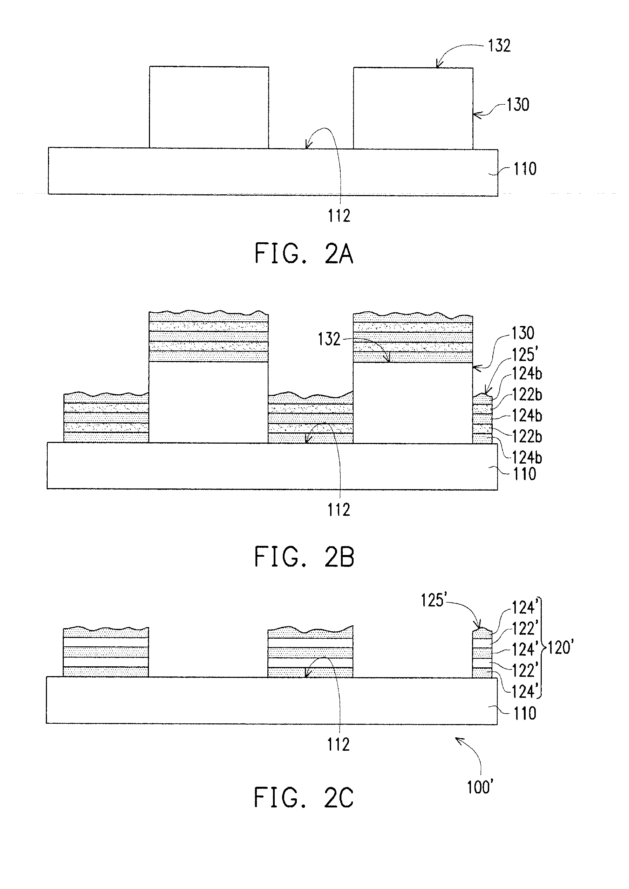

Fig. 2A to Fig. 2C are cross-sectional views illustrating a method for manufacturing an optical touch sensing structure according to another embodiment of the present invention. A structure of an optical touch sensing structure 100' in this embodiment (referring to FIG. 2C) is the same with the structure of the optical touch sensing structure 100, except that a method for manufacturing a stacked transparent optical layer 120' is different from the method for manufacturing the stacked transparent optical layer 120.

A manufacturing method of the optical touch sensing structure 100' of the present embodiment is approximately the same to that of the optical touch sensing structure 100 of the aforementioned embodiment, and after the step of Fig. 1A, i.e. after the transparent substrate 110 having the upper surface 112 is provided, forming a patterned film 130 on the upper surface 112 of the transparent substrate 110 through photolithography or printing, referring to Fig. 2A, wherein the patterned film 130 has a top surface 132, and a portion of the upper surface 112 of the transparent substrate 110 is exposed by the patterned film 130. Herein, the patterned film 130 is, for example, a film with low adhesion made of photo resist, carbon powder or the material containing with resin.

Referring to Fig. 2B, a stack of at least one first transparent material layer 122b and at least one second transparent material layer 124b are then formed on the upper surface 112 of the transparent substrate 110 and the top surface 132 of the patterned film 130 through vacuum deposition. The second transparent material layer 124b completely covers the upper surface 112 of the transparent substrate 110 and the top surface 132 of the patterned film 130, and the first transparent material layers 122b and the second transparent material layers 124b are stacked with each other and have a shape conforming to each other. Certainly, in another embodiment, the layer entirely covering the upper surface 112 of the transparent substrate 110 and the top surface 132 of the patterned film 130 may also be the first transparent material layer 122b, the construction illustrated herein should not be regarded as limiting. In addition, in the present embodiment, the first transparent material layer 122b is a transparent material layer having a high refractive index, while the second transparent material layer 124b is a transparent material layer having a low refractive index. It should be noted that in the present embodiment, the thickness of the patterned film 130 is greater than the total thickness of the stack of at least one first transparent material layer 122b and at least one second transparent material layer 124b.

Referring to Fig. 2B again, another second transparent material layer 124b is then formed as an outermost layer and the outmost second transparent material layer 124b is surface treated to form a rough surface 125'. The central line average surface roughness (Ra) of the rough surface 125' is, for example, greater than or equal to 0.03µm. In the regard, the surface treating method includes surface micro-etching, atmospheric plasma coating or oxide particle coating method. Certainly, in another embodiment, the outermost material layer of the stack may also be the first transparent material layer 122b, the construction illustrated herein should not be regarded as limiting.

Referring to Fig. 2C, finally, the patterned film 130 and a portion of the first transparent material layer 122b and a portion of the second transparent material layer 124b formed on the patterned film 130 are removed to expose the other portion of the upper surface 112 of the transparent substrate 110, so as to form the first transparent optical layer 122' and the second transparent optical layer 124', thereby achieving the stacked transparent optical layer 120' having the rough surface 125'. Herein, a method of removing the patterned film 130 and the portion of the first transparent material layer 122b and the portion of the second transparent material layer 124b formed on the patterned film 130 includes using photo resist remover or an organic solvent (for example, acetone ). Since the thickness of the patterned film 130 is greater than the total thickness of the stack of at least one first transparent material layer 122b and at least one second transparent material layer 124b formed on the upper surface 112 of the transparent substrate 110, the patterned film 130 and the stack of the portion of first transparent material layer 122b and the portion of second transparent material layer 124b formed on the patterned film 130 can be easily removed by using photo resist remover or an organic solvent. By now, the stacked transparent optical layer 120' has been formed on the upper surface 112 of the transparent substrate 110, with a portion of the upper surface 112 of the transparent substrate 110 being exposed.

In summary, because the optical touch sensing structure of the present invention includes the stacked transparent optical layer that allows a visible light to pass through and can reflect and scatter an infrared light, when the present optical touch sensing structure is subsequently applied in, for example, the display, it can effectively enhance the light transmittance of the display as well as prevent the image from getting foggy.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An optical touch sensing structure (100, 100'), comprising:
a transparent substrate (110) having an upper surface (112); and
a stacked transparent optical layer(120, 120') disposed on the upper surface (112) of the transparent substrate (110) with a portion of the upper surface (112) being exposed, the stacked transparent optical layer (120, 120') being formed by stacking at least one first transparent optical layer (122, 122') and at least one second transparent optical layer (124, 124'), the refractive index of the first transparent optical layer (122, 122') being greater than the refractive index of the second transparent optical layer (124, 124'), the stacked transparent optical layer (120, 120') being adapted to allow a visible light to pass through and comprising a rough surface (125, 125'), wherein when an infrared light (L1, L1') is incident to the stacked transparent optical layer(120, 120'), the infrared light(L2, L2', L3, L3')is reflected by the stacked transparent optical layer (120, 120') and scattered by the rough surface (125, 125') .

2. The optical touch sensing structure (100, 100') according to claim 1, wherein a difference between the refractive index of the first transparent optical layer (122, 122') and the refractive index of the second transparent optical layer (124,124') is greater than or equal to 0.4.

3. The optical touch sensing structure (100, 100') according to claim 2, wherein the refractive index of the first transparent optical layer (122, 122') ranges between 2.0 and 2.5, and the refractive index of the second transparent optical layer (124, 124') ranges between 1.4 and 1.6.

4. The optical touch sensing structure (100, 100') according to claim 1, wherein the material of the first transparent optical layer (122,122') comprises Niobium pentoxide, Tantalum pentoxide, Titanium dioxide, Zinc sulfide, or Zirconium dioxide.

5. The optical touch sensing structure (100, 100') according to claim 1, wherein the material of the second transparent optical layer (124, 124') comprises Silicon dioxide.

6. The optical touch sensing structure (100, 100') according to claim 1, wherein the central line average surface roughness of the rough surface (125, 125') is greater than or equal to 0.03µm.

7. A method for manufacturing an optical touch sensing structure(100, 100'), comprising:
providing a transparent substrate (110) having an upper surface (112); and
forming a stacked transparent optical layer (120, 120') on the upper surface (112) of the transparent substrate (110), the stacked transparent optical layer (120, 120') being formed by stacking at least one first transparent optical layer (122, 122') and at least one second transparent optical layer (124, 124'), the refractive index of the first transparent optical layer (122, 122') being greater than the refractive index of the second transparent optical layer(124, 124'), the stacked transparent optical layer (120, 120' exposing a portion of the upper surface (112) of the transparent substrate (110), the stacked transparent optical layer (120, 120') being adapted to allow a visible light to pass through and comprising a rough surface (125, 125'), wherein when an infrared light (L1, L1') is incident to the stacked transparent optical layer (120, 120'), the infrared light (L2, L2', L3, L3') is reflected by the stacked transparent optical layer (120, 120') and scattered by the rough surface (125, 125') .

8. The method for manufacturing the optical touch sensing structure (100) according to claim 7, wherein forming the stacked transparent optical layer (120) comprises:
forming a stack of at least one first transparent material layer (122a) and at least one second transparent material layer (124a) on the upper surface (112) of the transparent substrate (110) through vacuum deposition method, wherein the first transparent material layer (122a) or the second transparent material layer (124a) completely covers the upper surface (112) of the transparent substrate (110), and the first transparent material layer (122a)and the second transparent material layer (124a) are stacked with each other and have a shape conforming to each other;
surface treating the outermost first transparent material layer (122a) or the outermost second transparent material layer (124a) to form the rough surface (125);
and
patterning the first transparent material layer (122a) and the second transparent material layer (124a) to form the first transparent optical layer (122) and the second transparent optical layer (124), thereby achieving the stacked transparent optical layer (120) having the rough surface (125) .

9. The method for manufacturing the optical touch sensing structure (100') according to claim 7, wherein forming the stacked transparent optical layer (120') comprises:
forming a patterned film(130) on the upper surface (112)of the transparent substrate(110) through photolithography or printing, wherein the patterned film (130) has a top surface (132), and a portion of the upper surface (112) of the transparent substrate (110) is exposed by the patterned film (130) ;
forming a stack of at least one first transparent material layer (122b) and at least one second transparent material layer (124b) on the upper surface (112) of the transparent substrate (110) and the top surface (132) of the patterned film (130) through vacuum deposition method, wherein the first transparent material layer (122b) or the second transparent material layer (124b) completely covers the upper surface (112) of the transparent substrate (110) and the top surface (132) of the patterned film (130), and the first transparent material layer (122b) and the second transparent material layer (124b) are stacked with each other and have a shape conforming to each other;
surface treating the outermost first transparent material layer (122b) or the outermost second transparent material layer (124b) to form the rough surface (125') ;
and
removing the patterned film (130) and a portion of the first transparent material layer (122b) and a portion of the second transparent material layer (124b) formed on the patterned film (130) to expose the other portion of the upper surface (112) of the transparent substrate (110) so as to form the first transparent optical layer (122') and the second transparent optical layer (124'), thereby achieving the stacked transparent optical layer (120') having the rough surface (125') .

10. The method for manufacturing the optical touch sensing structure (100') according to claim 9, wherein a material of the patterned film (130) comprises an organic material.

11. The method for manufacturing the optical touch sensing structure (100, 100') according to claim 7, wherein a difference between the refractive index of the first transparent optical layer (122, 122') and the refractive index of the second transparent optical layer (124,124') is greater than or equal to 0.4.

12. The method for manufacturing the optical touch sensing structure (100,100') according to claim 11, wherein the refractive index of the first transparent optical layer (122,122') ranges between 2.0 and 2.5, and the refractive index of the second transparent optical layer (124,124') ranges between 1.4 and 1.6.

13. The method for manufacturing the optical touch sensing structure (100,100') according to claim 7, wherein the material of the first transparent optical layer (122,122')comprises Niobium pentoxide, Tantalum pentoxide, Titanium dioxide, Zinc sulfide, or Zirconium dioxide..

14. The method for manufacturing the optical touch sensing structure (100,100') according to claim 7, wherein the material of the second transparent optical layer (124,124'') comprises Silicon dioxide.

15. The method for manufacturing the optical touch sensing structure (100,100') according to claim 7, wherein the central line average surface roughness of the rough surface (125,125') is greater than or equal to 0.03µm.
